# FASCICULE DE BREVET EUROPEEN

(11) **EP 3 984 146 B1**
(45) Date de publication et mention de la délivrance du brevet: **21.02.2024**
(21) Numéro de dépôt: 20730303.3
(22) Date de dépôt: 09.06.2020
(51) Int. Cl.: H04B 7/185

(54) **SYSTÈME ET PROCÉDÉ DE RÉCEPTION ET DE GESTION DE SIGNAUX DE SATELLITES, DESTINÉS À UN ENGIN VOLANT**
SYSTEM UND VERFAHREN ZUR AUFNAHME UND VERWALTUNG VON SATELLITENSIGNALEN FÜR EIN LUFTFAHRZEUG
SYSTEM AND METHOD FOR RECEIVING AND MANAGING SATELLITE SIGNALS, INTENDED FOR A FLYING VEHICLE

(30) Priorité: 13.06.2019 FR 1906333
(43) Date de publication de la demande: 20.04.2022
(73) Titulaire: Airbus (S.A.S.), 31700 Blagnac (FR)
(72) Inventeur: DESAUTARD, Romain, 31700 Blagnac (FR); FISCHER, Wolfgang, 82024 Taufkirchen (DE); SMITH, Leslie, 31700 Blagnac (FR)
(74) Mandataire: Sarraméa, Claude
(86) Numéro de dépôt international: PCT/EP2020/065950
(87) Numéro de publication internationale: WO 2020/249553

(56) Documents cités:
- WO-A1-02/15582
- FR-A1- 2 793 631
- US-A1- 2002 073 437

## Description

### DOMAINE TECHNIQUE

La présente invention concerne un système et un procédé de réception et de gestion de signaux de satellites, destinés à un engin volant, en particulier un avion de transport, ainsi qu'un engin volant pourvu d'un tel système.

### ETAT DE LA TECHNIQUE

La présente invention est relative à la communication entre un engin volant et des satellites.

On sait que la connectivité haut débit des aéronefs, notamment des avions de transport, vers des satellites repose le plus souvent sur une antenne directionnelle. Cette antenne est orientée de façon électromécanique et elle est montée sur la partie supérieure du fuselage de l'aéronef sous un radôme. Ce radôme forme une protubérance impactant sévèrement la performance aérodynamique de l'aéronef. Par ailleurs, la directivité de l'antenne ne permet d'établir un lien qu'avec un seul satellite à la fois, ce qui induit des interruptions de service lors de relais d'un satellite à un autre.

Pour limiter l'impact aérodynamique, il est possible de remplacer l'antenne directionnelle électromécanique par une antenne plate à pointage électronique. Cependant, une telle solution ne permet de couvrir qu'un angle solide de +/- 75 degrés par rapport à la perpendiculaire du plan de l'antenne. Certains satellites risquent donc d'être hors du champ de couverture de l'antenne quand l'aéronef se trouve à des latitudes élevées ou est simplement en train de manoeuvrer.

Pour améliorer la qualité de la liaison, le brevet US-10 128 931 prévoit de combiner plusieurs antennes sur un seul modem pour une même constellation de satellites. Ce brevet décrit un système dans lequel les signaux reçus par plusieurs antennes sont additionnés pour améliorer la qualité de la liaison et qui comprend un sélecteur permettant de choisir l'antenne avec la meilleure qualité de signal pour l'émission.

Toutefois, le système décrit dans ce brevet ne propose pas de solution pour maintenir en parallèle plusieurs connexions vers différents services de communication par satellites, lors des évolutions de l'engin volant.

### EXPOSÉ DE L'INVENTION

La présente invention a pour objet de remédier à cet inconvénient. Elle concerne un système de réception et de gestion de signaux de satellites, destiné à un engin volant, comme défini par les revendications.

### BRÈVE DESCRIPTION DES FIGURES

Les figures annexées feront bien comprendre comment l'invention peut être réalisée. Sur ces figures, des références identiques désignent des éléments semblables.
[Fig 1] La figure 1 est le schéma synoptique d'un mode réalisation particulier d'un système de réception et de gestion de signaux de satellites.
[Fig 2] La figure 2 est une vue partielle schématique d'une partie d'un tel système monté sur un engin volant, pour une première position de l'engin volant par rapport à des satellites.
[Fig 3] La figure 3 est une figure similaire à celle de la figure 2, pour une deuxième position de l'engin volant par rapport aux satellites.
[Fig 4] La figure 4 est une figure similaire à celles des figures 2 et 3, pour une troisième position de l'engin volant par rapport aux satellites.
[Fig 5] La figure 5 montre schématiquement, en perspective, un avion, équipé d'un système de réception et de gestion de signaux de satellites, représenté partiellement.
[Fig 6] La figure 6 illustre schématiquement les étapes d'un procédé de réception et de gestion de signaux de satellites, mis en oeuvre par le système de la figure 1.

### DESCRIPTION DÉTAILLÉE

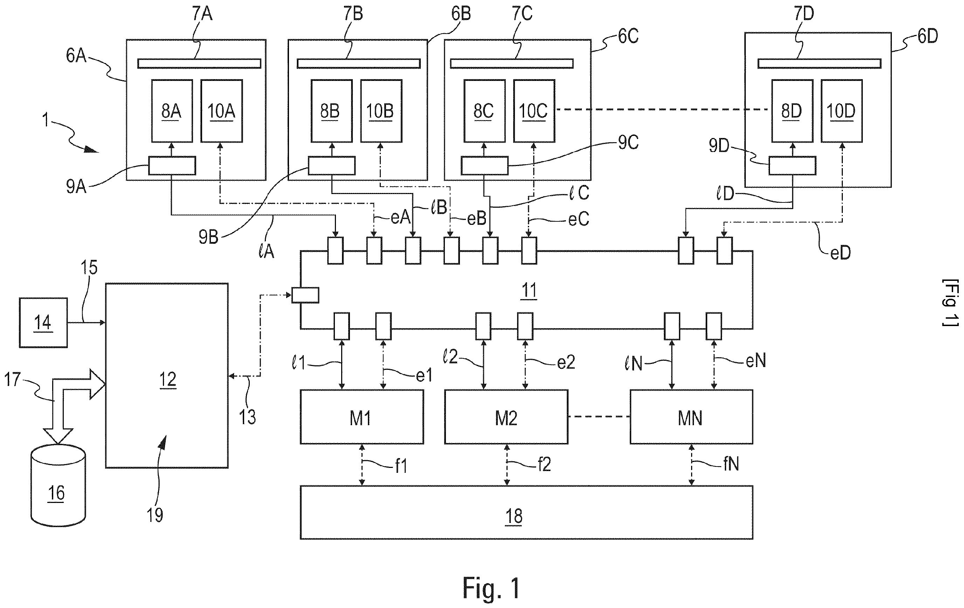

Le système 1 représenté schématiquement sur la figure 1 est un système de réception et de gestion, automatique et en temps réel, de signaux de satellites.

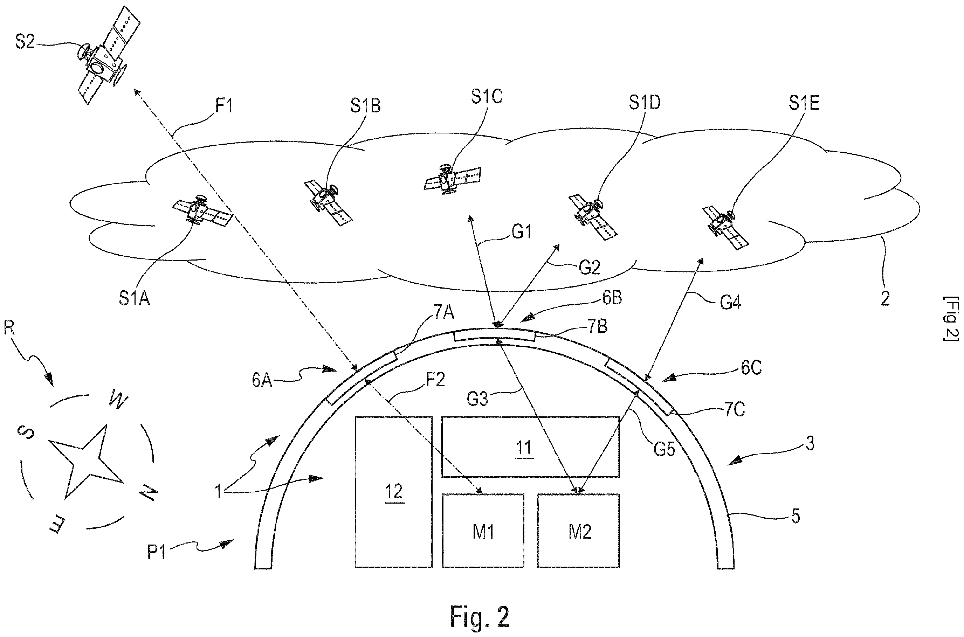

Les satellites pris en compte dans le cadre de la présente invention, peuvent être de types (usuels) différents. Il peut notamment s'agir de satellites et/ou de constellations de satellites situés à des orbites différentes, et en particulier :
- des satellites à orbites à basse altitude (LEO pour « Low Earth Orbit » en anglais), comme des satellites S1A, S1B, S1C, S1D et S1E d'une constellation 2 représentée sur les figures 2 à 4 ;
- des satellites à orbite géostationnaire (GEO pour « Geostationary Earth Orbit » en anglais), comme un satellite S2 des figures 2 à 4 ;
- des satellites à orbites intermédiaires (MEO pour « Medium Earth Orbit » en anglais).

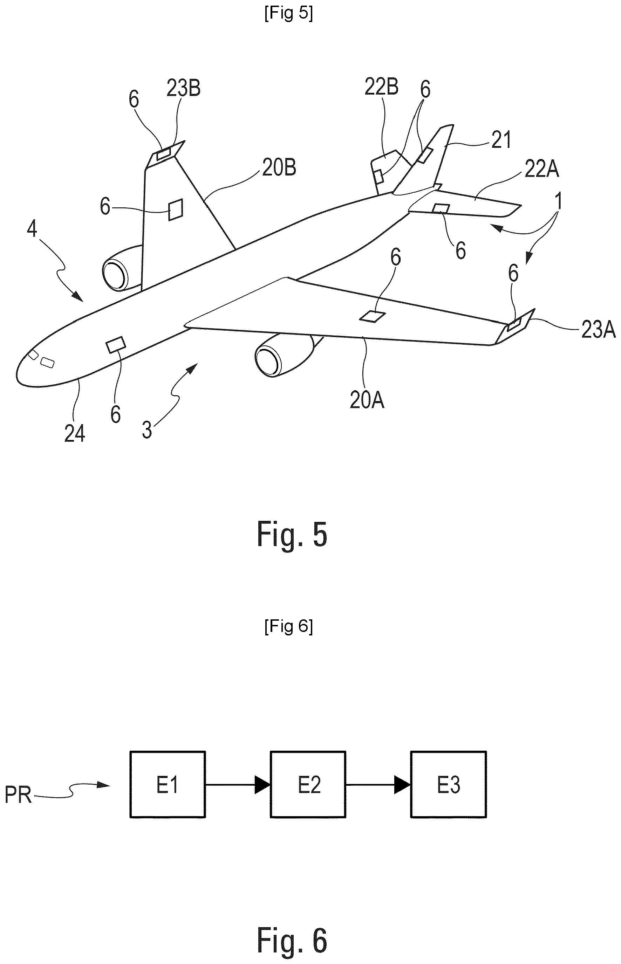

Le système 1 est monté sur un engin volant 3, comme précisé ci-dessous en référence aux figures 2 à 4 notamment. On assiste actuellement à une multiplication de services proposés via des satellites ou des constellations de satellites sur différentes orbites, dont certains peuvent être utilisés sur l'engin volant 3. Dans une application préférée, décrite ci-dessous en référence à la figure 5, l'engin volant 3 est un avion 4 de transport.

De façon usuelle, comme représenté schématiquement sur les figures 1 et 2 notamment, ledit système 1 comporte une pluralité d'antennes 6, différenciées par des références 6A, 6B, 6C et 6D, chacune desdites antennes 6A, 6B, 6C et 6D étant apte à recevoir des signaux d'un satellite S1A à S1E, S2.

Les antennes 6 du système 1 peuvent être de différents types usuels. Dans un mode de réalisation préféré, au moins certaines des antennes 6 sont des réseaux actifs à formation de faisceau électronique dont le pointage peut être commandé. Des configurations d'antennes plus simples utilisant des éléments passifs, ou à pointage mécanique, peuvent également être utilisées.

Par conséquent, le système 1 peut notamment comporter :
- des antennes à pointage électronique ; et/ou
- des antennes à pointage mécanique ; et/ou
- des antennes passives.

Dans un mode de réalisation préféré, une antenne 6 comporte un élément d'antenne (à savoir un élément d'émission et de réception de signaux radioélectriques) ainsi que d'autres éléments (ou périphériques) qui sont associés à cet élément d'antenne, tels qu'un amplificateur de gain en réception et en émission et/ou un convertisseur de fréquence intermédiaire. Dans le cadre de la présente invention, on entend par « antenne » l'ensemble du système constitué par l'élément d'antenne et les différents périphériques qui sont liés à cet élément d'antenne.

Dans le mode de réalisation particulier représenté sur la figure 1, chacune desdites antennes 6A, 6B, 6C et 6D est, de préférence, une antenne à pointage électronique, et elle comporte :
- un élément d'antenne 7A, 7B, 7C, 7D ;
- une unité 8A, 8B, 8C, 8D de traitement de signal analogique, mettant en oeuvre des filtrages et des amplifications ;
- une unité 9A, 9B, 9C, 9D de conversion analogique/numérique (de type « ADC/DAC » ou de type « IQ packetization/depacketization » en anglais) ; et
- un module 10A, 10B, 10C, 10D de gestion de l'élément d'antenne 7A, 7B, 7C, 7D. Ce module peut être intégré dans le reste de l'antenne ou être agencé à proximité.

Chacune des antennes 6A, 6B, 6C et 6D du système 1 est apte à recevoir des signaux d'un satellite ou de plusieurs satellites d'une même constellation de satellites.

Ledit système 1 comporte de plus, comme représenté sur la figure 1 :
- une pluralité de modems M1, M2,..., MN, N étant un entier. Chacun desdits modems M1 à MN est configuré pour gérer des données reçues d'au moins une antenne 6A à 6D du système 1. Les données reçues par un modem d'une antenne sont représentatives (de façon usuelle) des signaux reçus par cette antenne, après traitement de ces derniers ; et
- une unité d'aiguillage 11 apte à être commandée, comme précisé ci-dessous. Cette unité d'aiguillage 11 est configurée pour gérer, en temps réel, en fonction de commandes reçues (précisées ci-dessous), au moins l'allocation et la transmission des données des différentes antennes 6A à 6D aux différents modems M1 à MN. L'unité d'aiguillage 11 est en mesure d'allouer et de transmettre les données de l'une quelconque desdites antennes 6A à 6D à l'un quelconque desdits modems M1 à MN, en fonction de sa commande. Chacun desdits modems M1 à MN est apte à recevoir des données d'au moins une antenne 6A à 6D.

L'allocation des données des différentes antennes 6A à 6D aux différents modems M1 à MN dépend au moins de positions courantes des antennes 6A à 6D et d'informations de positions satellitaires, comme précisé ci-dessous.

Dans un premier mode de réalisation représenté sur la figure 1, le système 1 comporte une unité de commande 12 configurée pour commander l'unité d'aiguillage 11, par l'intermédiaire d'une liaison 13.

L'unité de commande 12 est configurée pour commander l'unité d'aiguillage 11, en fonction :
- au moins de la localisation des antennes sur l'engin volant 3, comme représenté sur les figures 2 à 4 où les éléments d'antenne 7A, 7B et 7C sont agencés sur une structure externe 5 de l'engin volant 3, notamment son fuselage. Cette localisation (position et orientation) peut, par exemple, être enregistrée dans une mémoire (non représentée) de l'unité de commande 12 ;
- de valeurs courantes de paramètres de vol de l'engin volant 3, reçus par exemple d'une unité de génération de paramètres 14 (précisée ci-dessous) via une liaison 15. A partir de ces valeurs courantes de paramètres de vol, notamment la position et l'attitude (ou orientation dans l'espace) de l'engin volant 3, et à l'aide de la localisation (connue) des éléments antennes 6A, 6B et 6C sur l'engin volant 3 et de leurs caractéristiques, l'unité de commande 12 est en mesure de déterminer l'orientation (ou la ligne de visée) courante de chacune des antennes ; et
- de données d'une base de données satellitaires 16 comprenant au moins lesdites informations de positions satellitaires. La base de données satellitaires 16 est reliée, par l'intermédiaire d'une liaison 17, à l'unité de commande 12.

A partir de l'orientation (ou ligne de visée) des antennes dans l'espace et des positions dans l'espace des satellites avec lesquels le système 1 souhaite communiquer, l'unité de commande 12 est en mesure de déterminer quelle antenne est en mesure de recevoir de façon appropriée les signaux d'un satellite donné et ainsi de commander l'unité d'aiguillage 11 pour quelle alloue les données de cette antenne au modem qui gère le service relatif à ce satellite donné.

Dans un mode de réalisation particulier, si la position et l'attitude futures de l'engin volant 3 sont connues, l'unité de commande 12 peut également utiliser ces informations (prédictives) pour gérer l'allocation, par exemple pour anticiper un changement de satellite en raison de la perte prochaine du satellite utilisé à l'instant courant.

La position et l'attitude de l'engin volant 3 peuvent être obtenues de différentes manières. En particulier :
- dans un premier mode de réalisation, l'unité de génération de paramètres 14 comprend des moyens usuels de l'engin volant 3 qui transmettent les valeurs courantes, via des bus avionique (liaison 15) par exemple de type « AFDX ». Ces moyens usuels peuvent comporter un récepteur de radionavigation de type « MMR » (pour « Multi-Mode Receiver » en anglais), et/ou une unité de référence inertielle et de données air de type « ADIRU » (pour « Air Data and Inertial Référence Unit » en anglais), et/ou un système de gestion de vol de type « FMS » (pour « Flight Management System » en anglais) pour des informations prédictives ; et
- dans un second mode de réalisation, l'unité de génération de paramètres 14 est un ensemble indépendant (spécialement dédié ou non au système 1) comprenant un système de référence inertielle et un système de positionnement de type GPS et éventuellement un baromètre. Un tel ensemble peut, par exemple, être intégré dans au moins certaines des antennes.

Dans l'exemple de la figure 1, les antennes 6A à 6D et les modems M1, M2 et MN sont reliés :
- à des ports de l'unité d'aiguillage par l'intermédiaire de liaisons IA à ID et I1, I2 et IN destinées à transmettre les données ; et
- à des ports de l'unité d'aiguillage 11 par l'intermédiaire de liaisons eA à eD et e1, e2 et eN destinées à transmettre des ordres de commandes (par exemple pour commander l'orientation des antennes si elles sont à pointage électronique).

Les résultats des traitements réalisés par les modems M1, M2 et MN, notamment sur les données reçues, peuvent être transmis à des dispositifs utilisateurs (non représentés) de l'engin volant. Pour ce faire, le système 1 de la figure 1 comporte un routeur 18 qui est reliée par l'intermédiaire de liaisons f1, f2 et fN (ethernet), respectivement aux modems M1, M2 et MN.

En outre, dans un second mode de réalisation (non représenté), le système 1 est configuré pour commander l'unité d'aiguillage 11, de façon collaborative ou négociée ou distribuée (par exemple par le biais d'algorithmes distribués de négociation entre modems). En particulier, les antennes et les modems du système 1 sont configurés pour commander, de façon collaborative, l'unité d'aiguillage, c'est-à-dire l'allocation et la transmission des données des différentes antennes aux différents modems. Dans ce second mode de réalisation, on prévoit des algorithmes de gestion de la configuration de l'unité aiguillage 11, qui sont décentralisés et négociés entre différents éléments du système 1, à savoir les modems et les antennes.

En variante, d'autres méthodes collaboratives ou distribuées peuvent également être envisagées, par exemple par négociation entre les différents modems, par gestion de priorités prédéfinies ou dynamiquement établies, ou via toute autre notion de qualité de service.

Dans le cadre de la présente invention, le mécanisme d'aiguillage des données (mis en oeuvre par l'unité aiguillage) peut être réalisé, soit au niveau analogique ou sur des flux déjà numérisés, soit en bande de base ou en fréquence intermédiaire.

Le système 1 est ainsi en mesure d'adapter, en temps réel, l'allocation et la transmission des données des différentes antennes aux différents modems de sorte que chaque modem puisse continuer à recevoir des données relatives à des signaux émis par un même satellite (ou une même constellation de satellites) avec lequel il est en communication et ceci notamment, lors du changement des positions courantes des antennes (qui peuvent varier lors du déplacement dans l'espace de l'engin volant 3). Cette gestion permet de maintenir la communication vers un service donné de communications par satellites. Comme, de plus, le système 1 comporte une pluralité d'antennes 6A et 6D et une pluralité de modems M1 à MN, il est en mesure de maintenir, le cas échéant, la communication simultanément vers plusieurs services différents, au cours du déplacement de l'engin volant 3, comme précisé ci-dessous en référence aux figures 2 à 4.

Pour pouvoir communiquer avec un satellite, une antenne doit mettre en oeuvre une fonction de modulation et de démodulation appropriée. De façon usuelle, les fonctions de modulation et de démodulation requises pour communiquer avec un satellite peuvent différer d'un satellite à un autre, d'une constellation (de satellites) à une autre, ou d'un opérateur à un autre.

Pour permettre la communication multiple entre l'engin volant 3 équipé du système 1 et différents satellites (ou différentes constellations de satellites), le système 1 doit donc disposer de la fonction de modulation et démodulation requise pour chaque satellite (ou constellation de satellites) avec lequel il souhaite communiquer. Pour la communication avec certains satellites, on doit utiliser une fréquence donnée et une polarisation donnée. On peut également avoir à régler un angle d'inclinaison (« skew angle » en anglais), ainsi qu'un canal (réglage en fréquence) et des valeurs d'amplification.

Aussi, dans un mode de réalisation préféré, le système 1 comporte une pluralité de fonctions de modulation et de démodulation adaptées à chacun des satellites ou des constellations de satellites avec lesquels le système 1 doit pouvoir communiquer. De plus, le système 1 comporte au moins un élément de gestion 19 (d'allocations) configuré pour allouer, à chacune des antennes dudit système 1, l'une desdites fonctions de modulation et de démodulation afin de permettre à chaque antenne de communiquer avec l'un desdits satellites (ou l'une desdites constellations de satellites) adaptés à la fonction de modulation et démodulation ainsi allouée.

Dans un mode de réalisation préféré, ledit élément de gestion 19 fait partie de l'unité de commande 12 (figure 1).

Dans une première réalisation, ledit élément de gestion 19 est configuré pour, lors d'un changement d'allocation (de fonction de modulation et de démodulation) à une antenne, reconfigurer directement l'antenne sur une nouvelle fonction de modulation et de démodulation, qui est envisagée. La commande d'antenne, mise en oeuvre par l'élément de gestion 19 et plus généralement par l'unité de commande 12, peut comporter les opérations suivantes : régler la fréquence, contrôler la polarisation, autoriser une émission, pointer l'antenne dans une direction donnée, ...

En outre, dans une seconde réalisation, ledit élément de gestion 19 est configuré pour, lors d'un changement d'allocation (de fonction de modulation et de démodulation) à une antenne, informer de ce changement le modem destiné à recevoir les données de cette antenne, ledit modem étant configuré pour reconfigurer l'antenne sur la nouvelle fonction de modulation et de démodulation, qui est envisagée.

Dans le cadre de la présente invention, le contrôle des antennes pour le pointage, la gestion des fréquences (en bande de base et en fréquence intermédiaire) et la polarisation, peut être géré directement par l'unité de commande 12, ou bien être laissé aux modems et aiguillé par l'unité d'aiguillage 11. De plus, la formation du faisceau pour chaque antenne peut être déterminée dans le modem M1, M2, MN, dans le module 10A à 10D de gestion d'éléments d'antenne, ou dans l'unité de commande 12.

Le système 1 prévoit donc des communications d'informations, dans les deux sens, des antennes vers les modems (en réception) et des modems vers les antennes (en transmission).

Le mode de réalisation de la figure 1 présente un exemple de commutation numérique pour le système 1. Le système 1 de la figure 1 montre une réalisation possible utilisant des flux numérisés (échantillons en paquets IQ, « packetized IQ samples » en anglais) qui sont transmis entre les modems et les antennes par l'unité d'aiguillage représentant un commutateur numérique. Un commutateur ethernet à vitesse élevée peut également être utilisé.

Le signal radiofréquence est numérisé par l'unité 9A, 9B, 9C, 9D pour la réception et par le modem M1, M2, MN pour la transmission. Les modems et les unités 9A, 9B, 9C, 9D échangent des échantillons en paquets IQ via l'unité d'aiguillage 11. L'unité de commande 12 contrôle l'unité d'aiguillage 11 pour transmettre ces paquets entre une antenne et un modem. L'antenne utilisée par un modem peut changer au cours du temps. Il est possible de combiner plusieurs antennes pour un seul modem, par exemple en prévoyant un élément de combinaison qui somme les signaux dans le domaine numérique et qui met en oeuvre une synchronisation de phase des signaux.

Dans ce mode de réalisation, l'unité d'aiguillage 11 peut réaliser :
- la commutation des échantillons IQ («IQ samples » en anglais) et des ordres de commande ; ou
- uniquement la commutation des échantillons IQ, un switch ethernet régulier pouvant alors être utilisé pour les ordres commande.

L'architecture montrée à titre d'exemple sur la figure 1 utilise donc un commutateur numérique. En variante, on peut également prévoir, dans le cadre de la présente invention, une architecture similaire mais qui utilise au moins un commutateur ethernet séparé pour les ordres de commande et/ou une matrice analogique pour sélectionner l'antenne qui est connectée à un signal donné. Ce mode de réalisation présente un avantage en ayant une compatibilité avec des modems existant dont les interfaces sont en bande L.

On présente ci-après, en référence aux figures 2 à 4, un exemple de gestion et de transmission de données, mis en oeuvre par le système 1.

Dans cet exemple, chacun des modems M1 et M2 considérés gère un service différent. Plus particulièrement, le modem M1 est utilisé pour établir une connexion vers le satellite S2 d'une constellation géostationnaire, et le modem M2 est utilisé pour établir des connexions vers différents stellites S1A, S1B, S1C, S1D et S1E de la constellation 2 en orbite basse.

Sur les figures 2 à 4, on a représenté une rose des vents R indiquant les points cardinaux : Nord (N), Sud (S), Est (E), et Ouest (W). La position de l'engin volant 3 par rapport à cette rose des vents R permet de mettre en évidence l'attitude de l'engin volant 3, ainsi que la position et l'orientation des éléments d'antennes 7A, 7B et 7C utilisés.

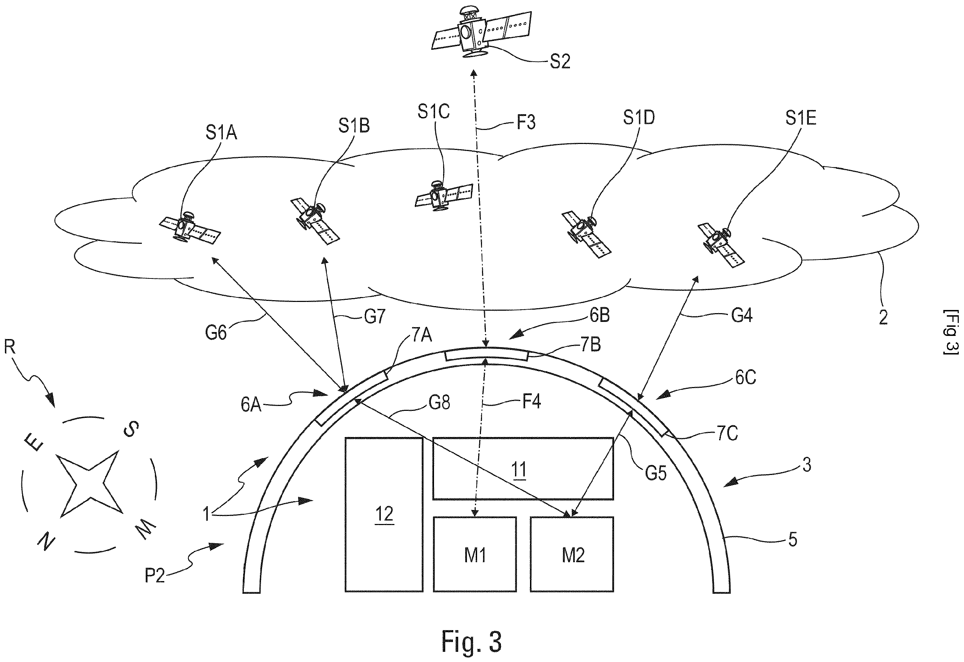

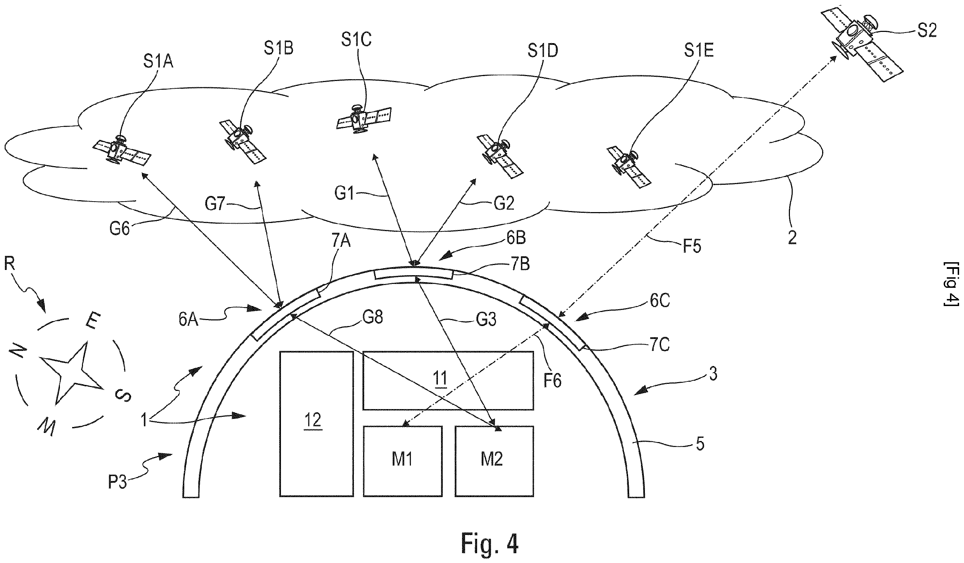

Comme l'engin volant 3 est en train de tourner, l'unité d'aiguillage 11 est commandé pour toujours allouer les données relatives aux signaux émis par le satellite S2 au modem M1 et d'utiliser pour communiquer avec le satellite S2 une antenne permettant de maintenir une ligne de visée. Plus particulièrement :
- dans la position P1 (dans l'espace) de l'engin volant 3 de la figure 2, l'antenne 6A présente une ligne de vue directe vers le satellite S2, pour générer une liaison entre le satellite S2 et le modem M1 comme illustré par des flèches F1 et F2 ;
- dans la position P2 ultérieure de l'engin volant 3 de la figure 3, l'antenne 6B présente une ligne de vue directe, vers le satellite S2 pour générer une liaison entre le satellite S2 et le modem M1 comme illustré par des flèches F3 et F4 ; et
- dans la position P3 ultérieure de l'engin volant 3 de la figure 4, l'antenne 6C présente une ligne de vue vers le satellite S2 pour générer une liaison entre le satellite S2 et le modem M1 comme illustré par des flèches F5 et F6.

De plus, pour maintenir la liaison entre le modem M2 et au moins un satellite S1A, S1B, S1C, S1D et S1E de la constellation 2 :
- dans la position P1 de l'engin volant 3 de la figure 2, on utilise les antennes 6B et 6C et les satellites S1C, S1D et S1E comme illustré par des flèches G1, G2, G3, G4 et G5 ;
- dans la position P2 de l'engin volant 3 de la figure 3, on utilise les antennes 6A et 6C et les satellites S1A, S1B et S1E comme illustré par des flèches G6, G7, G8, G4 et G5 ; et
- dans la position P3 de l'engin volant 3 de la figure 4, on utilise les antennes 6A et 6B et les satellites S1A, S1B, S1C et S1D comme illustré par des flèches G6, G7, G8, G1, G2 et G3.

Au fur et à mesure du vol de l'engin volant 3, les flux des informations (données et commandes) échangés entre les antennes et les modems sont donc adaptés dynamiquement, avec si nécessaire une reconfiguration des antennes, pour que chaque modem ait toujours à sa disposition l'antenne ou les antennes les mieux adaptées au maintien de sa connexion avec le satellite (ou la constellation de satellites) avec lequel il opère.

Dans le cas d'une constellation, l'optimisation peut prendre en compte l'anticipation de la rupture d'un lien avec un satellite par perte de ligne de vue directe au-dessus de l'horizon, et l'acquisition de nouveaux satellites qui viendraient à s'élever au-dessus de l'horizon en raison de la combinaison de leur mouvement propre sur leur orbite et du mouvement de l'engin volant 3.

Bien que décrit dans le cadre d'une application préférée dans le domaine aérien en étant monté sur un engin volant 3, le système 1 peut également être appliqué au domaine terrestre et même au domaine maritime, et notamment à des trains, des voitures,..., et plus généralement à tout élément mobile communiquant avec des satellites.

En outre, dans le domaine aérien, l'engin volant peut être un drone, un hélicoptère, ..., ou tout autre type d'engin ou véhicule capable de voler.

Dans une application particulière, représentée sur la figure 5, l'engin volant 3 équipé du système 1 est un avion 4 de transport. Dans une telle application, on agence de préférence un nombre suffisant d'antennes 6, notamment des antennes plates à pointage électronique, en différents endroits de la structure de l'avion 4 de transport. De préférence, ces endroits et les orientations des antennes 6 sont choisies de façon à assurer, par combinaison de couverture de chaque antenne 6, une couverture globale (obtenue par l'ensemble des antennes 6 du système 1) de 360° en azimut et au moins entre -20° et +90° en élévation (par rapport à un plan horizontal).

L'agencement de multiples antennes 6 en différents endroits de l'avion 4 donne la possibilité physique d'établir simultanément :
- une liaison radio entre l'avion 4 et plusieurs satellites différents, par exemple pour anticiper un passage de relais entre deux satellites sans interruption de service, comme dans l'exemple des figures 2 à 4 ;
- plusieurs liaisons radio entre l'avion 4 et un même satellite, lorsque ce satellite apparaît dans le champ de couverture de plusieurs des antennes, par exemple pour maximiser les débits de la communication que l'on souhaite établir entre l'avion 4 et ce satellite.

Dans un mode de réalisation particulier, représenté sur la figure 5, le système 1 comprend une ou plusieurs antennes 6 qui sont agencées sur l'un ou plusieurs des éléments suivants de l'avion 4 :
- une aile 20A, 20B ;
- la dérive 21 ;
- un empennage horizontal 22A, 22B ;
- une ailette d'extrémité 23A, 23B d'une aile 20A, 20B ;
- le fuselage 24, par exemple derrière différents hublots présents à droite et à gauche le long dudit fuselage 24.

Le système 1, tel que décrit ci-dessus, présente de nombreux avantages. En particulier, l'unité d'aiguillage 11 permet de réaliser un aiguillage dynamique des flux de données de plusieurs antennes vers plusieurs modems de façon à maintenir en parallèle plusieurs connexions vers différents services de communication par satellite, via différentes constellations opérant dans les mêmes bandes de fréquences, potentiellement sur différentes orbites, et ceci quel que soit les évolutions de l'engin volant 3 en réallouant dynamiquement les différentes antennes aux différents modems en fonction de leur orientation instantanée.

Le système 1, tel que décrit ci-dessus, est apte à mettre en oeuvre un procédé PR de réception et de gestion de signaux de satellites.

Ce procédé PR comprend, comme représenté sur la figure 6, un premier ensemble d'étapes E1, mises en oeuvre par les antennes du système 1, consistant à recevoir (de façon usuelle) des signaux de satellites.

Ledit procédé PR comporte, de plus :
- une étape de gestion E2, mise en oeuvre par l'unité d'aiguillage 11 commandée et le cas échéant par l'unité de commande 12 qui la commande. Cette étape de gestion E2 consistant à gérer, en temps réel, l'allocation et la transmission des données des différentes antennes aux différents modems, les données de l'une quelconque desdites antennes pouvant être allouées et transmises à l'un quelconque desdits modems. L'allocation des données des différentes antennes aux différents modems dépend au moins de positions courantes des antennes et d'informations de positions satellitaires ; et
- un second ensemble d'étapes E3 mises en oeuvre par les modems M1, M2 et MN du système 1 et consistant à gérer et traiter de façon usuelle les données reçues par ces modems M1, M2 et MN.

L'étape de gestion E2 consiste à adapter, en temps réel, l'allocation et la transmission des données des différentes antennes aux différents modems M1, M2 et MN de sorte que, au cours du déplacement de l'engin volant 3, chaque modem reçoit toujours des données relatives à des signaux émis par un même satellite (ou une même constellation de satellites) avec lequel il est en communication.

En outre, l'étape de gestion E2 consiste également à allouer à chacune des antennes une fonction de modulation et de démodulation lui permettant de communiquer avec l'un desdits satellites (ou l'une desdites constellations de satellites) adaptés à la fonction de modulation et démodulation ainsi allouée.

Le procédé PR permet donc d'établir des liens de communication satellitaire simultanément vers différents satellites ou constellations de satellites, et de maintenir ces liens de façon dynamique en réallouant en temps réel les flux de données de différentes antennes vers différents modems de façon à conserver suffisamment de capacité de réception et de transmission vers les différents satellites (ou les différentes constellations) auxquels l'engin volant 3 est connecté, au fur et à mesure du déplacement de ce dernier.

## Revendications

1. Système de réception et de gestion de signaux de satellites, destiné à un engin volant, ledit système (1) comportant une pluralité d'antennes (6A à 6D), chacune desdites antennes (6A à 6D) étant apte à recevoir des signaux de satellites (S1A à S1E, S2) relatifs à différents services,
**caractérisé en ce qu'**il comporte de plus :
- une pluralité de modems (M1, M2, MN), chacun desdits modems (M1, M2, MN), étant configuré pour gérer des données reçues d'au moins une antenne (6A à 6D), lesdites données étant représentatives des signaux reçus par l'antenne (6A à 6D), chacun desdits modems (M1, M2, MN) étant configuré pour gérer le service relatif à un satellite donné ;
- une unité d'aiguillage (11) apte à être commandée et configurée pour gérer, en temps réel, en fonction de sa commande, au moins l'allocation et la transmission des données des différentes antennes (6A à 6D) aux différents modems (M1, M2, MN), les données de l'une quelconque desdites antennes (6A à 6D) pouvant être allouées et transmises à l'un quelconque desdits modems (M1, M2, MN), l'allocation des données des différentes antennes (6A à 6D) aux différents modems (M1, M2, MN) dépendant au moins de positions courantes des antennes (6A à 6D) et d'informations de positions satellitaires.

2. Système selon la revendication 1,
**caractérisé en ce qu'**il comporte une unité de commande (12) configurée pour commander l'unité d'aiguillage (11).

3. Système selon la revendication 2,
**caractérisé en ce que** l'unité de commande (12) est configurée pour commander l'unité d'aiguillage (11) en fonction au moins de la localisation des antennes (6A à 6D) sur l'engin volant (3), de paramètres de vol courants de l'engin volant (3) et de données d'une base de données satellitaires (16) comprenant au moins lesdites informations de positions satellitaires.

4. Système selon la revendication 1,
**caractérisé en ce que** les antennes (6A à 6D) et les modems (M1, M2, MN) sont configurés pour commander de façon collaborative l'unité d'aiguillage (11).

5. Système selon l'une quelconque des revendications précédentes,
**caractérisé en ce que** l'unité d'aiguillage (11) est configurée pour pouvoir transmettre à un seul et même modem (M1, M2, MN) les données de plusieurs antennes (6A à 6D) recevant des signaux d'un même satellite (S2) ou de satellites (S1A à S1E) d'une même constellation (2) de satellites, via un module sommant ces données.

6. Système selon l'une quelconque des revendications précédentes,
**caractérisé en ce qu'**il comporte une pluralité de fonctions de modulation et de démodulation adaptées à chacun des satellites ou des constellations de satellites avec lesquels le système (1) doit pouvoir communiquer, et au moins un élément de gestion (19) configuré pour allouer à chacune des antennes (6A à 6D) l'une desdites fonctions de modulation et de démodulation lui permettant de communiquer avec l'un desdits satellites ou l'une desdites constellations de satellites adaptés à la fonction de modulation et démodulation ainsi allouée.

7. Système selon les revendications 2 et 6,
**caractérisé en ce que** ledit élément de gestion (19) fait partie de ladite unité de commande (12).

8. Système selon l'une des revendications 6 et 7,
**caractérisé en ce que** ledit élément de gestion (19) est configuré pour, lors d'un changement d'allocation de fonction de modulation et de démodulation à une antenne (6A à 6D), reconfigurer l'antenne (6A à 6D) sur une nouvelle fonction de modulation et de démodulation.

9. Système selon l'une des revendications 6 et 7,
**caractérisé en ce que** ledit élément de gestion (19) est configuré pour, lors d'un changement d'allocation de fonction de modulation et de démodulation à une antenne (6A à 6D), informer de ce changement le modem (M1, M2, MN) destiné à recevoir les données de cette antenne (6A à 6D), ledit modem (M1, M2, MN) étant configuré pour reconfigurer l'antenne (6A à 6D) sur une nouvelle fonction de modulation et de démodulation.

10. Procédé de réception et de gestion de signaux de satellites, à l'aide d'un système (1) tel que celui spécifié sous l'une quelconque des revendications 1 à 9, ledit procédé comprenant un premier ensemble d'étapes (E1), mises en oeuvre par les antennes (6A à 6D) du système (1), consistant à recevoir des signaux de satellites (S1A à S1E, S2) relatifs à différents services,
**caractérisé en ce qu'**il comporte, de plus :
- au moins une étape de gestion (E2) consistant à gérer, en temps réel, au moins l'allocation et la transmission de données des différentes antennes (6A à 6D) aux différents modems (M1, M2, MN) du système (1), les données d'une antenne (6A à 6D) étant représentatives des signaux reçus par cette antenne (6A à 6D), chacun desdits modems (M1, M2, MN) étant configurés pour gérer un service relatif à un satellite donné, les données de l'une quelconque desdites antennes (6A à 6D) pouvant être allouées et transmises à l'un quelconque desdits modems (M1, M2, MN), chacun desdits modems (M1, M2, MN) étant configuré pour gérer le service relatif à un satellite donné, l'allocation des données des différentes antennes (6A à 6D) aux différents modems (M1, M2, MN) dépendant au moins de positions courantes des antennes (6A à 6D) et d'informations de positions satellitaires ; et
- un second ensemble d'étapes (E3), mises en oeuvre par les modems (M1, M2, MN) du système (1), consistant à gérer les données reçues.

11. Procédé selon la revendication 10,
**caractérisé en ce que** l'étape de gestion (E2) consiste à adapter, en temps réel, l'allocation et la transmission des données des différentes antennes (6A à 6D) aux différents modems (M1, M2, MN) de sorte que, au cours du déplacement de l'engin volant (3), chaque modem (M1, M2, MN) reçoit toujours des données relatives à des signaux émis par un même satellite ou une même constellation de satellites avec lequel il est en communication.

12. Procédé selon l'une des revendications 10 et 11,
**caractérisé en ce que** l'étape de gestion (E2) consiste à allouer à chacune des antennes (6A à 6D) une fonction de modulation et de démodulation lui permettant de communiquer avec l'un desdits satellites ou l'une desdites constellations de satellites, adaptés à la fonction de modulation et démodulation ainsi allouée.

13. Engin volant,
**caractérisé en ce qu'**il comporte un système (1) tel que celui spécifié sous l'une quelconque des revendications 1 à 9.

14. Engin volant selon la revendication 13,
**caractérisé en ce que** ledit système (1) comporte une pluralité d'antennes (6A à 6D) agencées sur ledit engin volant (3) de manière à générer ensemble une couverture globale de 360° en azimut et au moins entre -20° et +90° en élévation.

15. Engin volant selon l'une des revendications 13 et 14,
**caractérisé en ce que** l'engin volant 3 est un avion (4), et **en ce qu'**au moins l'une des antennes (6) du système (1) est agencée sur l'un des éléments suivants de l'avion (4) :
- une aile (20A, 20B) ;
- la dérive (21) ;
- un empennage horizontal (22A, 22B) ;
- une ailette (23A, 23B) d'extrémité d'aile ;
- le fuselage (24).

## Patentansprüche

1. System zum Empfangen und Verwalten von Satellitensignalen, das für ein Luftfahrzeug bestimmt ist, wobei das System (1) eine Mehrzahl von Antennen (6A bis 6D) umfasst, wobei jede der Antennen (6A bis 6D) geeignet ist, Signale von Satelliten (S1A bis S1E, S2) bezüglich verschiedener Dienste zu empfangen,
**dadurch gekennzeichnet, dass** es ferner umfasst:
- eine Mehrzahl von Modems (M1, M2, MN), wobei jedes der Modems (M1, M2, MN) dazu ausgestaltet ist, Daten zu verwalten, die von mindestens einer Antenne (6A bis 6D) empfangen werden, wobei die Daten für die von der Antenne (6A bis 6D) empfangenen Signale repräsentativ sind, wobei jedes der Modems (M1, M2, MN) dazu ausgestaltet ist, den Dienst bezüglich eines gegebenen Satelliten zu verwalten;
- eine Weicheneinheit (11), die geeignet ist, gesteuert und konfiguriert zu werden, um in Echtzeit in Abhängigkeit von ihrer Steuerung mindestens die Allokation und die Übertragung der Daten der verschiedenen Antennen (6A bis 6D) an die verschiedenen Modems (M1, M2, MN) zu verwalten, wobei die Daten einer beliebigen der Antennen (6A bis 6D) an ein beliebiges der Modems (M1, M2, MN) alloziert und übertragen werden können, wobei die Allokation der Daten der verschiedenen Antennen (6A bis 6D) an die verschiedenen Modems (M1, M2, MN) mindestens von aktuellen Positionen der Antennen (6A bis 6D) und von Satellitenpositionsinformationen abhängt.

2. System nach Anspruch 1,
**dadurch gekennzeichnet, dass** es eine Steuereinheit (12) umfasst, die dazu ausgestaltet ist, die Weicheneinheit (11) zu steuern.

3. System nach Anspruch 2,
**dadurch gekennzeichnet, dass** die Steuereinheit (12) dazu ausgestaltet ist, die Weicheneinheit (11) mindestens in Abhängigkeit von der Lage der Antennen (6A bis 6D) am Luftfahrzeug (3), von aktuellen Flugparametern des Luftfahrzeugs (3) und von Daten einer Satellitendatenbank (16), die mindestens die Satellitenpositionsinformationen umfasst, zu steuern.

4. System nach Anspruch 1,
**dadurch gekennzeichnet, dass** die Antennen (6A bis 6D) und die Modems (M1, M2, MN) dazu ausgestaltet sind, die Weicheneinheit (11) kollaborativ zu steuern.

5. System nach einem der vorhergehenden Ansprüche,
**dadurch gekennzeichnet, dass** die Weicheneinheit (11) dazu ausgestaltet ist, an ein und dasselbe Modem (M1, M2, MN) die Daten von mehreren Antennen (6A bis 6D) übertragen zu können, die Signale von einem selben Satelliten (S2) oder von Satelliten (S1A bis S1E) einer selben Konstellation (2) von Satelliten empfangen, über ein diese Daten addierendes Modul.

6. System nach einem der vorhergehenden Ansprüche,
**dadurch gekennzeichnet, dass** es eine Mehrzahl von Modulations- und Demodulationsfunktionen umfasst, die an jeden der Satelliten oder der Konstellationen von Satelliten angepasst sind, mit denen das System (1) kommunizieren können muss, und mindestens ein Verwaltungselement (19), das dazu ausgestaltet ist, an jede der Antennen (6A bis 6D) eine der Modulations- und Demodulationsfunktionen zu allozieren, die es ihr ermöglicht, mit einem der Satelliten oder einer der Konstellationen von Satelliten zu kommunizieren, die an die so zugewiesene Modulations- und Demodulationsfunktion angepasst sind.

7. System nach den Ansprüchen 2 und 6,
**dadurch gekennzeichnet, dass** das Verwaltungselement (19) zu der Steuereinheit (12) gehört.

8. System nach einem der Ansprüche 6 und 7,
**dadurch gekennzeichnet, dass** das Verwaltungselement (19) dazu ausgestaltet ist, bei einer Änderung der Allokation einer Modulations- und Demodulationsfunktion an eine Antenne (6A bis 6D) die Antenne (6A bis 6D) auf eine neue Modulations- und Demodulationsfunktion umzukonfigurieren.

9. System nach einem der Ansprüche 6 und 7,
**dadurch gekennzeichnet, dass** das Verwaltungselement (19) dazu ausgestaltet ist, bei einer Änderung der Allokation einer Modulations- und Demodulationsfunktion an eine Antenne (6A bis 6D) das Modem (M1, M2, MN) über diese Änderung zu informieren, das dazu bestimmt ist, die Daten dieser Antenne (6A bis 6D) zu empfangen, wobei das Modem (M1, M2, MN) dazu ausgestaltet ist, die Antenne (6A bis 6D) auf eine neue Modulations- und Demodulationsfunktion umzukonfigurieren.

10. Verfahren zum Empfangen und Verwalten von Satellitensignalen mithilfe eines Systems (1) wie dem in einem der Ansprüche 1 bis 9 spezifizierten, wobei das Verfahren eine erste Gruppe von Schritten (E1) umfasst, die von den Antennen (6A bis 6D) des Systems (1) ausgeführt werden und darin bestehen, Signale von Satelliten (S1A bis S1E, S2) bezüglich verschiedener Dienste zu empfangen,
**dadurch gekennzeichnet, dass** es ferner umfasst:
- mindestens einen Verwaltungsschritt (E2), der darin besteht, in Echtzeit mindestens die Allokation und die Übertragung von Daten der verschiedenen Antennen (6A bis 6D) an die verschiedenen Modems (M1, M2, MN) des Systems (1) zu verwalten, wobei die Daten einer Antenne (6A bis 6D) für die von dieser Antenne (6A bis 6D) empfangenen Signale repräsentativ sind, wobei jedes der Modems (M1, M2, MN) dazu ausgestaltet ist, einen Dienst bezüglich eines gegebenen Satelliten zu verwalten, wobei die Daten einer beliebigen der Antennen (6A bis 6D) an ein beliebiges der Modems (M1, M2, MN) alloziert und übertragen werden können, wobei jedes der Modems (M1, M2, MN) dazu ausgestaltet ist, den Dienst bezüglich eines gegebenen Satelliten zu verwalten, wobei die Allokation der Daten der verschiedenen Antennen (6A bis 6D) an die verschiedenen Modems (M1, M2, MN) mindestens von aktuellen Positionen der Antennen (6A bis 6D) und von Satellitenpositionsinformationen abhängt; und
- eine zweite Gruppe von Schritten (E3), die von den Modems (M1, M2, MN) des Systems (1) ausgeführt werden und darin bestehen, die empfangenen Daten zu verwalten.

11. Verfahren nach Anspruch 10,
**dadurch gekennzeichnet, dass** der Verwaltungsschritt (E2) darin besteht, in Echtzeit die Allokation und die Übertragung der Daten der verschiedenen Antennen (6A bis 6D) an die verschiedenen Modems (M1, M2, MN) so anzupassen, dass während der Fortbewegung des Luftfahrzeugs (3) jedes Modem (M1, M2, MN) immer Daten bezüglich von Signalen empfängt, die von einem selben Satelliten oder einer selben Konstellation von Satelliten gesendet werden, mit dem bzw. der es in Verbindung steht.

12. Verfahren nach einem der Ansprüche 10 und 11,
**dadurch gekennzeichnet, dass** der Verwaltungsschritt (E2) darin besteht, an jede der Antennen (6A bis 6D) eine Modulations- und Demodulationsfunktion zu allozieren, die es ihr ermöglicht, mit einem der Satelliten oder einer der Konstellationen von Satelliten zu kommunizieren, die an die so allozierte Modulations- und Demodulationsfunktion angepasst sind.

13. Luftfahrzeug,
**dadurch gekennzeichnet, dass** es ein System (1) wie das in einem der Ansprüche 1 bis 9 spezifizierte umfasst.

14. Luftfahrzeug nach Anspruch 13,
**dadurch gekennzeichnet, dass** das System (1) eine Mehrzahl von Antennen (6A bis 6D) umfasst, die an dem Luftfahrzeug (3) so angeordnet sind, dass sie gemeinsam eine globale Abdeckung von 360° im Azimut und mindestens zwischen - 20° und +90° in Elevation erzeugen.

15. Luftfahrzeug nach einem der Ansprüche 13 und 14,
**dadurch gekennzeichnet, dass** das Luftfahrzeug 3 ein Flugzeug (4) ist, und dadurch, dass mindestens eine der Antennen (6) des Systems (1) an einem der folgenden Elemente des Flugzeugs (4) angeordnet ist:
- einem Flügel (20A, 20B);
- dem Seitenleitwerk (21);
- einem Höhenleitwerk (22A, 22B);
- einem Winglet (23A, 23B);
- dem Rumpf (24).

## Claims

1. System, intended for a flying machine, for receiving and managing satellite signals, said system (1) comprising a plurality of antennas (6A to 6D), each of said antennas (6A to 6D) being able to receive satellite signals from satellites (S1A to S1E, S2) relating to various services,
**characterized in that** it additionally comprises:
- a plurality of modems (M1, M2, MN), each of said modems (M1, M2, MN) being configured so as to manage data received from at least one antenna (6A to 6D), said data being representative of signals received by the antenna (6A to 6D), each of said modems (M1, M2, MN) being configured so as to manage the service relating to a given satellite;
- a switching unit (11) able to be controlled and configured so as to manage, in real time, on the basis of its command, at least the allocation and the transmission of the data from the various antennas (6A to 6D) to the various modems (M1, M2, MN), the data from any one of said antennas (6A to 6D) being able to be allocated and transmitted to any one of said modems (M1, M2, MN), the allocation of the data from the various antennas (6A to 6D) to the various modems (M1, M2, MN) depending at least on current positions of the antennas (6A to 6D) and on satellite position information.

2. System according to Claim 1,
**characterized in that** it comprises a control unit (12) configured so as to control the switching unit (11).

3. System according to Claim 2,
**characterized in that** the control unit (12) is configured so as to control the switching unit (11) on the basis at least of the location of the antennas (6A to 6D) on the flying machine (3), of current flight parameters of the flying machine (3) and of data from a satellite database (16) comprising at least said satellite positioning information.

4. System according to Claim 1,
**characterized in that** the antennas (6A to 6D) and the modems (M1, M2, MN) are configured so as to collaboratively control the switching unit (11).

5. System according to any one of the preceding claims,
**characterized in that** the switching unit (11) is configured so as to be able to transmit, to just one and the same modem (M1, M2, MN), the data from a plurality of antennas (6A to 6D) receiving signals from one and the same satellite (S2) or from satellites (S1A to S1E) of one and the same satellite constellation (2) via a module that sums these data.

6. System according to any one of the preceding claims,
**characterized in that** it comprises a plurality of modulation and demodulation functions adapted to each of the satellites or satellite constellations with which the system (1) has to be able to communicate, and at least one management element (19) configured so as to allocate one of said modulation and demodulation functions to each of the antennas (6A to 6D), allowing it to communicate with one of said satellites or one of said satellite constellations adapted to the thus-allocated modulation and demodulation function.

7. System according to Claims 2 and 6,
**characterized in that** said management element (19) forms part of said control unit (12).

8. System according to either of Claims 6 and 7,
**characterized in that** said management element (19) is configured, upon a change of allocation of modulation and demodulation function to an antenna (6A to 6D), so as to reconfigure the antenna (6A to 6D) for a new modulation and demodulation function.

9. System according to either of Claims 6 and 7,
**characterized in that** said management element (19) is configured, upon a change of allocation of modulation and demodulation function to an antenna (6A to 6D), so as to notify this change to the modem (M1, M2, MN) intended to receive the data from this antenna (6A to 6D), said modem (M1, M2, MN) being configured so as to reconfigure the antenna (6A to 6D) for a new modulation and demodulation function.

10. Method for receiving and managing satellite signals, using a system (1) such as that specified in any one of Claims 1 to 9, said method comprising a first set of steps (E1), implemented by the antennas (6A to 6D) of the system (1), consisting in receiving satellite signals from satellites (S1A to S1E, S2) relating to various services,
**characterized in that** it additionally comprises:
- at least one management step (E2) consisting in managing, in real time, at least the allocation and the transmission of data from the various antennas (6A to 6D) to the various modems (M1, M2, MN) of the system (1), the data from an antenna (6A to 6D) being representative of signals received by this antenna (6A to 6D), each of said modems (M1, M2, MN) being configured so as to manage a service relating to a given satellite, the data from any one of said antennas (6A to 6D) being able to be allocated and transmitted to any one of said modems (M1, M2, MN), each of said modems (M1, M2, MN) being configured so as to manage the service relating to a given satellite, the allocation of the data from the various antennas (6A to 6D) to the various modems (M1, M2, MN) depending at least on current positions of the antennas (6A to 6D) and on satellite position information; and
- a second set of steps (E3), implemented by the modems (M1, M2, MN) of the system (1), consisting in managing the received data.

11. Method according to Claim 10,
**characterized in that** the management step (E2) consists in adapting, in real time, the allocation and the transmission of the data from the various antennas (6A to 6D) to the various modems (M1, M2, MN) such that, while the flying machine (3) is moving, each modem (M1, M2, MN) always receives data relating to signals transmitted by one and the same satellite or one and the same satellite constellation with which it is communicating.

12. Method according to either of Claims 10 and 11,
**characterized in that** the management step (E2) consists in allocating a modulation and demodulation function to each of the antennas (6A to 6D), allowing it to communicate with one of said satellites or one of said satellite constellations, adapted to the thus-allocated modulation and demodulation function.

13. Flying machine,
**characterized in that** it comprises a system (1) such as that specified in any one of Claims 1 to 9.

14. Flying machine according to Claim 13,
**characterized in that** said system (1) comprises a plurality of antennas (6A to 6D) arranged on said flying machine (3) so as to generate together an overall coverage of 360° azimuth and at least between -20° and +90° elevation.

15. Flying machine according to either of Claims 13 and 14, **characterized in that** the flying machine 3 is an aeroplane (4), and **in that** at least one of the antennas (6) of the system (1) is arranged on one of the following elements of the aeroplane (4):
- a wing (20A, 20B);
- the tail fin (21);
- a horizontal tail (22A, 22B);
- a wing-tip winglet (23A, 23B);
- the fuselage (24).
